# EUROPÄISCHE PATENTSCHRIFT

(11) **EP 2 438 319 B1**
(45) Veröffentlichungstag und Bekanntmachung des Hinweises auf die Patenterteilung: **11.03.2015**
(21) Anmeldenummer: 11721230.8
(22) Anmeldetag: 21.04.2011
(51) Int. Cl.: F16C 33/41

(54) **KUGELGEFÜHRTER KÄFIG**
BALL-GUIDED CAGE
CAGE GUIDÉE PAR BILLES

(30) Priorität: 19.11.2010 DE 202010015674 U; 10.05.2010 DE 102010020019
(43) Veröffentlichungstag der Anmeldung: 11.04.2012
(73) Patentinhaber: Gebr. Reinfurt GmbH & Co. KG, 97222 Rimpar (DE)
(72) Erfinder: NIEDERMEIER, Herbert, 97490 Poppenhausen (DE)
(74) Vertreter: Müller-Boré & Partner Patentanwälte PartG mbB
(86) Internationale Anmeldenummer: PCT/EP2011/002056
(87) Internationale Veröffentlichungsnummer: WO 2011/141122

(56) Entgegenhaltungen:
- DE-A1- 2 019 893
- DE-A1- 4 034 516
- DE-B3-102008 027 305
- DE-C- 317 329
- DE-C- 340 315
- GB-A- 312 040
- GB-A- 478 825
- JP-A- 2001 191 214
- US-A- 501 374

## Beschreibung

Die vorliegende Erfindung betrifft Schnappkäfige, die in Radialkugellagern, vorzugsweise in Radialrillenkugellagern zum Einsatz kommen.

### Stand der Technik

Schnappkäfige dienen dazu, Kugeln des Kugelsatzes gemäß der vorgegebenen Teilung auf Position zu halten. Bei der Montage des Kugellagers schnappt der Schnappkäfig in den Kugelsatz ein. Ein nicht montierter Käfig hat zur Folge, dass die Kugeln bei Innenring- oder Außenringrotation zusammenlaufen, was dazu führt, dass das Kugellager sehr schnell ausfällt.

Schnappkäfige aus Kunststoffmaterial für Rillenkugellager können durch Spritzguss bzw. durch spanende Formgebung hergestellt werden. Innerhalb dieser Gruppe von Käfigen unterscheidet man wiederum zwischen kugelgeführten und schultergeführten Ausführungen.

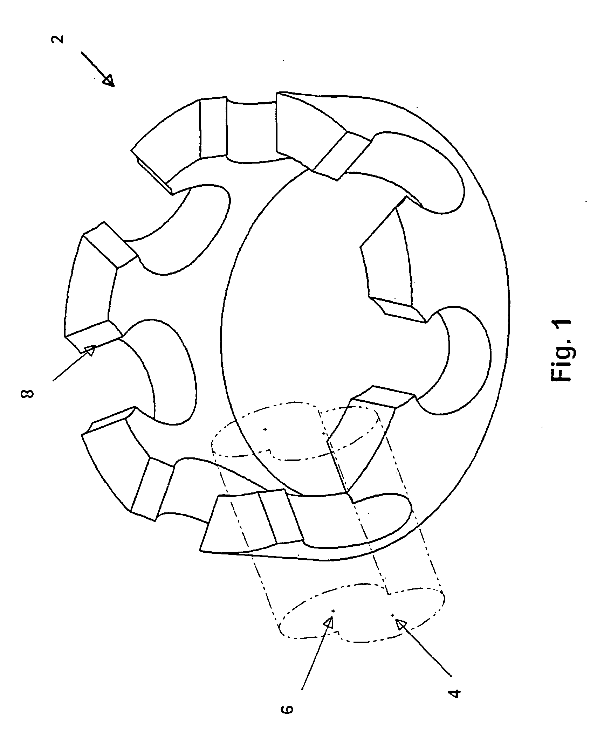

Durch die Herstellmethode der spanenden Formgebung können bisher nur schultergeführte Käfigausführungen gefertigt werden. Die Aufnahmelöcher für die Kugeln, d.h. die Kugelkalotten, werden dabei herstellungsbedingt radial eingebracht (Fig. 1). Sehr oft erhält der Käfig am Übergang von der offenen Kalottenseite (Schnappseite) zur Planfläche eine 2. Gegenbohrung, um die Verhältnisse für das Einschnappen in den Kugelsatz zu begünstigen und um zu verhindern, dass der Käfig während des Einschnappvorgangs beschädigt wird. Dieses Design hat den Nachteil, dass die Kugeln während des Abrollens zwischen Innenring und Außenring den Käfig nicht so eng führen können, dass dieser sich nicht exzentrisch verschiebt und dadurch keinen Kontakt zur Innenringschulter oder Außenringschulter aufnimmt. Aus diesem Grund werden die spanend hergestellten Käfige so ausgelegt, dass sie sich über einen definierten Führungsspalt entweder gegen den Innenring oder gegen den Außenring abstützen. Die Folge ist, dass derartige Käfige im Gegensatz zu kugelgeführten Ausführungen ein deutlich höheres dynamisches Reibmoment erzeugen, da sie sich nicht nur im Gleitkontakt zu den sich abwälzenden Kugeln, sondern auch im Gleitkontakt zur Innen- bzw. Außenringschulter befinden. Damit verbunden ist eine Erhöhung der Temperatur im Lagerinnenraum.

Ein weiterer, gravierender Nachteil des schultergeführten Käfigs zeigt sich in Mangelschmierungssituationen des Kugellagers, die häufig in Anwendungen der Dentaltechnik vorherrschen. In Dentalturbinenkugellagern, die mit einer Drehzahl von bis zu 500.000 min-1 betrieben werden, können keine schleifenden Abdeckungen (Dichtscheiben) eingesetzt werden, da diese im Betrieb hohe Reibwerte bzw. Temperaturen generieren. Diese Temperaturerhöhung wäre aufgrund der Tatsache, dass eine Gerätetemperatur > 38°C von Zahntechnikern und Zahnärzten nicht gewünscht ist, inakzeptabel. Diese Kugellager können deshalb nicht abgedichtet, sondern nur abgedeckt werden. Eine derartige Deckscheibe hat aber den Nachteil, dass ein definierter Spalt zwischen Deckscheibe und Innenring besteht, durch den Schmiermittel nach außen gelangen kann. Im medizinischen Bereich, insbesondere in Dental-Turbinenlagern, wird der Effekt des Schmiermittelaustritts dadurch verstärkt, dass die Versorgungsluft der Turbine nicht nur über den Abluftkanal, sondern auch durch das Turbinenlager nach außen entweichen kann. Dies führt zu einem Transport des Schmiermittel (Schmierfett bzw -öl) nach außen und dadurch zu der vorstehend beschriebenen Mangelschmierungssituation. In diesem Betriebszustand tritt am Käfig im Gleitkontakt zur Innenring- bzw. AußenringSchulter verstärkt abrasiver Verschleiß auf, der sehr schnell zum Ausfall des Kugellagers führt.

Alle beschriebenen Nachteile des schultergeführten Käfigs wirken sich lebensdauermindernd auf das Kugellager aus.

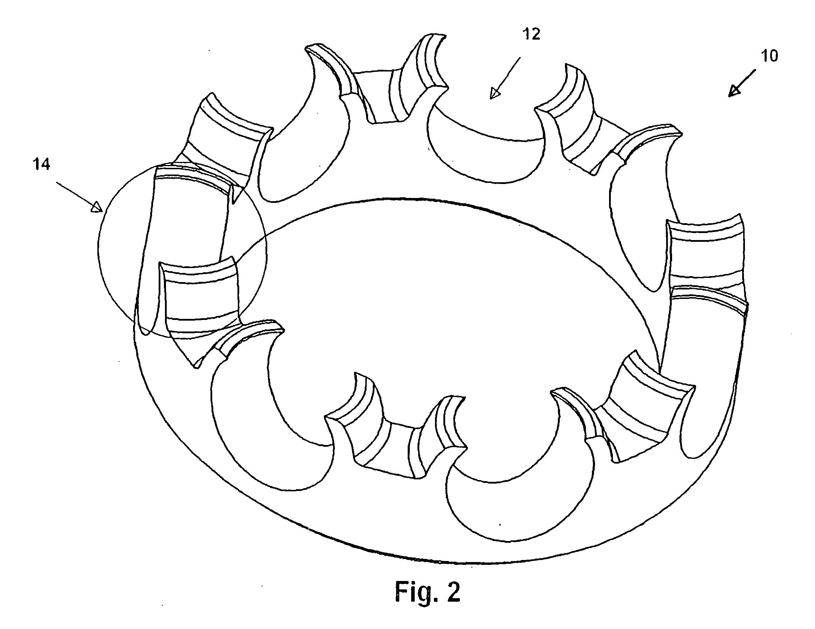

Kugelgeführte Schnappkäfige verfügen nicht über die oben beschriebenen, nachteiligen Eigenschaften und sind daher den schultergeführten Käfigvarianten technisch überlegen. Kugelgeführte Käfige aus Kunststoffmaterial werden im Spritzguss hergestellt, da die hierfür notwendige, radial auszubildende Formgebung der Kalotten bisher nur über eine Spritzgussform ermöglicht werden konnte (Fig. 2). Die technischen Vorteile dieser Käfigvariante auf der einen Seite werden durch verfahrensbedingte Nachteile beim Spritzgießen auf der anderen Seite wieder deutlich eingeschränkt. So führt der Anspritzpunkt bzw. die teilweise erforderlichen mehreren Anspritzpunkte am Käfig zu nicht tolerierbaren Unwuchteigenschaften in Hochgeschwindigkeitsanwendungen. Auf der anderen Seite sind die Formtoleranzen am spritzgegossenen Käfig nach dem Erkalten und Entformen aus dem Werkzeug um ein Vielfaches höher als bei der spanenden Herstellung, was sich ebenfalls negativ auf das Laufverhalten des Käfigs auswirkt. Selbst ein technisch weiterentwickeltes Spritzgießverfahren, welches o.g. Nachteile kompensieren würde, ist nicht praktikabel, da bei kleineren Losgrößen von Käfigen (z.B. Muster, Kleinserien) die Wirtschaftlichkeit nicht gegeben ist, weil Investitionskosten für das Spritzgießwerkzeug erheblich sind.

Darüber hinaus sind Hochleistungskunststoffe, die weite Verbreitung finden, teilweise nicht spritzgießfähig. Baumwollgewebeverstärktes Phenolharz beispielsweise, das als Standardwerkstoff für alle Spindellager und Schrägkugellager dient, wird als Verbundwerkstoff in Wickeltechnik hergestellt und ist daher spritzgießtechnisch nicht verarbeitbar. Polyamidimid (Handelsbezeichnung Torlon) hingegen wird in der Medizintechnik, insbesondere in Dentaltechnik sehr stark eingesetzt. Dieser Werkstoff ist zwar spritzgießfähig, entfaltet jedoch seine optimalen Materialeigenschaften erst im Anschluss an einen nachgeschalteten Temperprozess. Diese Polykondensationsreaktion führt zu einem hohen Maß an Schwindung, die wiederum dafür verantwortlich ist, dass sowohl Maß- als auch Formtoleranzen nicht beherrschbar sind.

DE 317 329 C offenbart einen Kugelkäfig für Radialkugellager, welcher aus einem Ring mit seitlich offenen zylindrischen Bohrungen besteht, die als Taschen für die Kugeln dienen, wobei eine umlaufende Nut in den die Kugeltaschen trennenden Zwischenwänden in der Nähe des äußeren Umfangs des Rings vorgesehen ist, und die so gebildeten äußeren nachgiebigen Teile der Zwischenwände mittels eines trichterförmigen Presswerkzeugs nach innen gedrückt sind und elastische Zungen ausbilden, welche ein Ausfallen der Kugeln verhindert.

GB 312 040 A offenbart einen Kugelkäfig, umfassend einen Stahlring mit in Axialrichtung einseitig offenen zylindrischen Taschen, welche die Kugeln aufnehmen. Die Taschen werden durch eine ringförmige Abdeckung, welche mit dem Stahlring mittels Schrauben verbunden wird, verschlossen. Ferner wird ein Kugelkäfig für Axialkugellager offenbart, umfassend einen Stahlring mit in Radialrichtung nach Außen hin offenen Taschen, wobei nach dem Einführen der Kugeln die Kanten der Öffnungen der Taschen umgeformt werden, um ein Herausfallen der Kugeln zu verhindern.

GB 478 825 A offenbart einen Kugelkäfig für Axialkugellager, wobei der ringförmige Kugelkäfig aus porösem Material gesintert ist und Kugeltaschen umfasst, welche als in Axialrichtung in etwa halbzylinderförmige Aussparungen am äußeren Umfang des Kugelkäfigs ausgebildet sind, wobei sich die Wände der Kugeltaschen entlang der Umfangslinie der Kugeln etwas über den mittleren Bereich der Kugeln erstrecken, so dass die Kugeln von den Wänden der Kugeltaschen teilweise umschlossen sind, und dadurch ein Herausfallen der Kugeln in radialer Richtung verhindert wird.

### Aufgabenstellung

Der vorliegenden Erfindung liegt somit die Aufgabe zugrunde, einen kugelgeführten Käfig zu konzipieren, der werkstoffunabhängig durch einfache Herstellung gefertigt werden kann.

Diese Aufgabe wird durch die Gegenstände der unabhängigen Ansprüche gelöst. Bevorzugte Ausführungsformen ergeben sich aus den abhängigen Ansprüchen.

### Zusammenfassung der Erfindung

Ein Aspekt der Erfindung betrifft ein Verfahren zum Herstellen eines kugelgeführten Schnappkäfigs für Kugellager mit den folgenden Schritten:
- Bereitstellen eines Halbzeugs mit ringkreisförmigem Endabschnitt bzw. eines ringförmigen Rohlings;
- Bereitstellen eines Schneidwerkzeugs, welches eine durchgehende Schneide, umfassend einen am freien Ende des Schneidwerkzeugs vorstehenden Teil und einen dazu zurückgesetzten Schaft, aufweist;
- Erzeugen von mindestens einer Kugeltasche mittels des Schneidwerkzeugs, umfassend eine im wesentlichen zylindrischen Kugelkalotte und zumindest eine die Kugelkalotte teilweise abdeckende bzw. übergreifende bzw. eine teilweise über die Kugelkalotte ragende Schnappkante, wobei das Erzeugen der Kugeltasche die folgenden Schritte umfasst:
   - Absenken des rotierenden Schneidwerkzeugs in Axialrichtung des ringkreisförmigen Endabschnitts bzw. des ringförmigen Rohlings bis um ein Maß b unterhalb der Oberkante des ringkreisförmigen Endabschnitts bzw. des ringförmigen Rohlings, wobei der Rotationsmittelpunkt des Schneidwerkzeugs um ein Maß a von einem vorbestimmbaren Kugelkalottenmittelpunkt quer zur Axialrichtung des ringkreisförmigen Endabschnitts bzw. des ringförmigen Rohlings versetzt ist;
   - Verfahren des rotierenden Schneidwerkzeugs quer zur Axialrichtung des ringkreisförmigen Endabschnitts bzw. des ringförmigen Rohlings um das Maß a derart, dass der Rotationsmittelpunkt des Schneidwerkzeugs und der vorbestimmbare Kugelkalottenmittelpunkt übereinstimmen;
   - weiteres Absenken des rotierenden Schneidwerkzeugs in Axialrichtung des ringkreisförmigen Endabschnitts bzw. des ringförmigen Rohlings um ein Maß c unter Ausbildung der Kugelkalotte.

Der ringkreisförmige Endabschnitt bzw. der ringförmige Rohling kann beispielsweise einen rechteckigen Querschnitt aufweisen oder aber auch eine andere Geometrie, wie beispielsweise einen mehreckigen, ovalen oder runden Querschnitt.

Bei Verwendung eines Halbzeugs mit ringkreisförmigem Endabschnitt kann es sich bei dem Halbzeug insbesondere um Rohrmaterial handeln oder auch um Vollmaterial wie beispielsweise eine Rundstange. Der ringkreisförmige Endabschnitt wird dabei vorzugsweise in vorangehenden Arbeitsschritten erzeugt. Es ist aber auch denkbar, dass zunächst Vollmaterial bearbeitet wird, um die Kugeltaschen zu erzeugen, und die Ringform erst in nachgehenden Arbeitsschritten erzeugt wird. Um den fertigen Schnappkäfig zu erhalten, wird vorzugsweise nach der Bearbeitung der ringkreisförmige Endabschnitt des Halbzeugs vom restlichen Teil des Halbzeugs abgetrennt. Dies geschieht beispielsweise durch Abstechen bzw. Abschneiden. Arbeitschritte wie beispielsweise Gleitschleifen oder Gratbeseitigung können vor oder nach dem Abtrennen erfolgen.

Bei dem Schneidwerkzeug kann es sich um jedes Werkzeug handeln, welches durch Rotation spanend Material abtragen kann und unter Rotation eine Form mit einem aufgeweiteten Ende ausbildet. Das Schneidwerkzeug kann hierbei auch mehrere Schneiden aufweisen. Insbesondere kann es sich bei dem Schneidwerkzeug um einen Bohrstichel oder einen Bohrer handeln. Das freie Ende des Schneidwerkzeug kann plan bzw. flach oder auch ausgewölbt sein.

Die Kugeltasche umfasst eine Kugelkalotte und zumindest eine die Kugelkalotte teilweise abdeckende bzw. überdeckende bzw. eine teilweise über die Kugelkalotte ragende Schnappkante. Bei Vorhandensein von mehreren Kugeltaschen im Schnappkäfig sind die Kugelkalotten vorzugsweise in gleichmäßigen Abständen angeordnet. Es ist jedoch auch denkbar, dass die Kugelkalotten in ungleichmäßigen Abständen angeordnet sind oder dass eine oder mehrere Kugeltaschen eine Öffnung auf der entgegengesetzten Seite des Schnappkäfigs aufweisen. Es ist ebenfalls denkbar, dass der Schnappkäfig auch eine oder mehrere Kugelkalotten ohne Schnappkante aufweist.

Die Kugelkalotte ist im wesentlichen zylindrisch. Der Kalottengrund kann plan bzw. flach sein, oder kann eine Wölbung aufweisen. Der Kalottendurchmesser entspricht vorzugsweise in etwa dem Durchmesser der Kugeln des Kugellagers. Da die Stärke bzw. Dicke des ringkreisförmigen Endabschnitts bzw. des ringförmigen Rohlings geringer ist als der Durchmesser der Kugel, ragt die Kugel im eingebauten Zustand beidseitig in Radialrichtung aus dem Schnappkäfig bzw. aus der Kugelkalotte heraus.

Erzeugen im Sinne der Erfindung bedeutet Fräsen, Bohren, Schneiden oder eine sonstige spanende Bearbeitung bzw. Herstellung, bei der Material abgetragen wird.

Absenken im Sinne der Erfindung ist das Verfahren des Schneidwerkzeugs in Axialrichtung des ringkreisförmigen Endabschnitts bzw. des ringförmigen Rohlings, d.h. von der Einspannung des Schneidwerkzeugs her gesehen in Richtung auf den ringkreisförmigen Endabschnitt bzw. des ringförmigen Rohling zu. Ein Anheben würde demgemäß das Verfahren in die umgekehrte Richtung bedeuten.

Axialrichtung des ringkreisförmigen Endabschnitts bzw. des ringförmigen Rohlings im Sinne der Erfindung ist eine Richtung parallel zur Symmetrielinie des ringkreisförmigen Endabschnitts bzw. des ringförmigen Rohlings bzw. senkrecht auf die durch den ringkreisförmigen Endabschnitt bzw. des ringförmigen Rohlings aufgespannte Ebene.

Im Sinne der Erfindung bedeutet Absenken des rotierenden Schneidwerkzeugs in Axialrichtung des ringkreisförmigen Endabschnitts bzw. des ringförmigen Rohlings bis um ein Maß b unterhalb der Oberkante des ringkreisförmigen Endabschnitts bzw. des ringförmigen Rohlings, dass das freie Ende des Schneidwerkzeugs axial bis zu einem Punkt abgesenkt wird, der um das Maß b von der Ebene, in der die obere Seite bzw. die Oberfläche des ringkreisförmigen Endabschnitts bzw. des ringförmigen Rohlings liegt, orthogonal beabstandet ist.

Der vorbestimmbare Kugelkalottenmittelpunkt im Sinne der Erfindung ist der Mittelpunkt der zu erzeugenden Kugelkalotte in der Draufsicht, bzw. der Schnittpunkt der Ebene orthogonal zur Axialrichtung des ringkreisförmigen Endabschnitts bzw. des ringförmigen Rohlings mit der Symmetrielinie der zu erzeugenden Kugelkalotte. Die Lage des Kugelkalottenmittelpunkts ist vorbestimmbar und somit frei wählbar. Vorzugsweise liegt der Kugelkalottenmittelpunkt in Radialrichtung mittig zwischen der Innenkante und der Außenkante des ringkreisförmigen Endabschnitts bzw. des ringförmigen Rohlings. Bei Vorhandensein von mehreren Kugeltaschen sind die Kugelkalottenmittelpunkte vorzugsweise gleichmäßig über den Schnappkäfig verteilt.

Vorteilhafterweise wird durch das erfindungsgemäße Verfahren eine Kugelkalotte erzeugt, die eine Kugel radial umschließt, d.h. der Schnappkäfig kann über die Kugel eng geführt und dadurch als kugelgeführte Variante ausgelegt werden, wobei die Schnappkante ein Herausfallen der Kugel verhindert. Gegenüber eines schultergeführten Kugelkäfigs ergibt sich hierdurch ein reduziertes Reibmoment und dadurch auch eine geringere Wärmeentwicklung innerhalb des Kugellagers, ein geringerer abrasiver Verschleiß, insbesondere in Mangelschmierungssituationen, sowie eine Erhöhung der Lebensdauer, insbesondere in Hochgeschwindigkeitskugellagern. Zudem weist der erfindungsgemäße Kugelkäfig eine Schnappkante auf, die ein Herausfallen der Kugel verhindert. Weiter vorteilhaft ist auch die einfache Herstellung, die durch das erfindungsgemäße Verfahren ermöglicht wird. So ist die Herstellung des Schnappkäfigs mit jeder handelsüblichen CNC-Drehmaschine möglich, wie beispielsweise der Spinner PD400. Vorteilhaft ist auch die hohe Herstellungsgeschwindigkeit. Die Bearbeitungsschritte zur Herstellung des Schnappkäfigs können in einem Zug, d.h. ohne Stillstandzeiten von Spindel und NC-Achse, hergestellt werden. Dadurch sind die Zerspanungszeiten nur geringfügig länger als bei Standardkäfigen bzw. schultergeführten Käfigen. Gegenüber der Herstellung schultergeführter Käfige mit einer zweiten Gegenbohrung ist das erfindungsgemäße Herstellverfahren wirtschaftlicher.

Das erfindungsgemäße Verfahren kann zur Verdeutlichung auch anders dargelegt werden:
- Schritt 1:: Bereitstellen eines Halbzeugs mit ringkreisförmigem Endabschnitt bzw. eines ringförmigen Rohlings;
- Schritt 2:: Bereitstellen eines Schneidwerkzeugs, welches eine durchgehende Schneide, umfassend aus einen am freien Ende des Schneidwerkzeugs vorstehenden Teil und einen dazu zurückgesetzten Schaft, aufweist;
- Schritt 3:: Erzeugen von mindestens einer Kugeltasche mittels des Schneidwerkzeugs, umfassend eine im wesentlichen zylindrischen Kugelkalotte und zumindest eine die Kugelkalotte teilweise abdeckende bzw. übergreifende bzw. eine teilweise über die Kugelkalotte ragende Schnappkante, wobei das Erzeugen der Kugeltasche die folgenden Schritte umfasst:
- Schritt 3.1.1:: Bohren eines ersten Abschnitts der Kugeltasche in Axialrichtung des ringkreisförmigen Endabschnitts bzw. des ringförmigen Rohlings um ein Maß b, oder
- Schritt 3.1.2:: Absenken des Schneidwerkzeugs in Axialrichtung des ringkreisförmigen Endabschnitts bzw. des ringförmigen Rohlings innerhalb oder außerhalb des ringkreisförmigen Endabschnitts bzw. des ringförmigen Rohlings um ein Maß b unter die Oberkante des ringkreisförmigen Endabschnitts bzw. des ringförmigen Rohlings, wobei der Rotationsmittelpunkt des Schneidwerkzeugs um ein Maß a von einem vorbestimmbaren Kugelkalottenmittelpunkt quer zur Axialrichtung des ringkreisförmigen Endabschnitts bzw. des ringförmigen Rohlings versetzt ist;
- Schritt 3.2.1:: nach Schritt 3.1.1 Erzeugen eines zweiten Abschnitts der Kugeltasche oder
- Schritt 3.2.2:: nach Schritt 3.1.2 Erzeugen eines ersten Abschnitts der Kugeltasche durch Verfahren des Schneidwerkzeugs quer zur Axialrichtung des ringkreisförmigen Endabschnitts bzw. des ringförmigen Rohlings um das Maß a derart, dass der Rotationsmittelpunkt des Schneidwerkzeugs und der vorbestimmbare Kugelkalottenmittelpunkt übereinstimmen;
- Schritt 3.3.1:: nach Schritt 3.2.1 Bohren eines dritten Abschnitts der Kugeltasche oder
- Schritt 3.3.2:: nach Schritt 3.2.2 Bohren eines zweiten Abschnitts der Kugeltasche in Axialrichtung des ringkreisförmigen Endabschnitts bzw. des ringförmigen Rohlings mit einer Bohrtiefe vom Maß c unter Ausbildung der Kugelkalotte.

Bei Schritt 3.1.1 wird beim Absenken bereits Material entfernt. Bei Schritt 3.1.2 hingegen wird zunächst abgesenkt ohne Spanen, innerhalb oder außerhalb des ringkreisförmigen Endabschnitts bzw. des ringförmigen Rohlings, und erst im Schritt 3.2.2 dringt Schneidwerkzeug in das Material des ringkreisförmigen Endabschnitts bzw. des ringförmigen Rohlings ein.

Vorzugsweise wird nach dem Erzeugen einer Kugeltasche das Schneidwerkzeug in umgekehrter Reihenfolge aus der Kugeltasche herausgefahren. In anderen Worten wird das Schneidwerkzeug um das Maß c in Axialrichtung des ringkreisförmigen Endabschnitts bzw. des ringförmigen Rohlings angehoben, dann um das Maß a quer zur Axialrichtung des ringkreisförmigen Endabschnitts bzw. des ringförmigen Rohlings zur ursprünglichen Absenk-Position bei der Erzeugung verfahren und dann mindestens um das Maß b in Axialrichtung des ringkreisförmigen Endabschnitts bzw. des ringförmigen Rohlings angehoben.

Vorteilhafterweise kann hierdurch einfach die Werkstückspindel um die Kugelteilung des herzustellenden Schnappkäfigs weitergetaktet werden, um die nächste Kugeltasche zu erzeugen. So können in kurzer Zeit alle Kugeltaschen des Schnappkäfigs erzeugt werden. Vorteilhaft ist auch, dass dies mit jeder handelsüblichen CNC-Maschine, wie z.B. der Spinner PD 400, möglich ist.

Vorzugsweise kann der Käfig nach dem Erzeugen der Kugeltaschen fertigbearbeitet und abgestochen werden, bevor ein abschließendes Gleitschleifen erfolgt, um die entstandenen Grate zu beseitigen.

Vorzugsweise umfasst bzw. besteht das Halbzeug mit ringkreisförmigem Endabschnitt bzw. der ringförmige Rohling aus Kunststoffmaterial, weiter vorzugsweise aus baumwollgewebe- bzw. papierverstärktem Phenolharz, Polyamidimid (PAI), Polyamid (PA), Polyoxymethylen (POM), Polyetherketon (PEK), Polyetheretherketon (PEEK), Polyimid (PI), Polyphenylensulfon (PPS) oder Polytetrafluorethylen (PTFE). Ebenso sind Blends aus oben genannten Polymeren denkbar. Die Kunststoffmaterialien können auch in gleitmodifizierter Form durch Beimengung von Gleitadditiven und/oder Fasern vorliegen.

Vorteilhafterweise können für das Verfahren zum Herstellen des Schnappkäfigs Kunststoffmaterialien verwendet werden, welche Hochleistungswerkstoffe sind und hervorragende Eigenschaften hinsichtlich der Verwendung in einem Kugellager aufweisen, jedoch nicht spritzgießfähig sind bzw. Probleme beim Spritzgießen mit sich bringen. Durch die Verwendung dieser Materialien können Schnappkäfige hergestellt werden, die ein geringes Reibmoment und eine hohe Lebensdauer aufweisen und für einen geräuscharmen Lauf des Kugellagers sorgen.

Vorzugsweise wird beim Herstellen der zumindest einen Kugeltasche das Absenken des rotierenden Schneidwerkzeugs in Axialrichtung des ringkreisförmigen Endabschnitts bzw. des ringförmigen Rohlings bis um das Maß b unterhalb der Oberkante des ringkreisförmigen Endabschnitts bzw. des ringförmigen Rohlings derart erfolgen, dass der Rotationsmittelpunkt des Schneidwerkzeugs um das Maß a von dem vorbestimmbaren Kugelkalottenmittelpunkt quer zur Axialrichtung des ringkreisförmigen Endabschnitts bzw. des ringförmigen Rohlings in Richtung des Symmetriemittelpunkts des ringkreisförmigen Endabschnitts bzw. des ringförmigen Rohlings versetzt ist oder in Radialrichtung des ringkreisförmigen Endabschnitts bzw. des ringförmigen Rohlings nach außen versetzt ist oder seitlich in Tangentialrichtung des Teilkreises des ringkreisförmigen Endabschnitts bzw. des ringförmigen Rohlings versetzt ist.

Vorteilhafterweise wird durch die Versetzung in Richtung des Symmetriemittelpunkts oder nach außen oder seitlich in Tangentialrichtung des Teilkreises des ringkreisförmigen Endabschnitts bzw. des ringförmigen Rohlings eine einfache Programmierung der Werkzeugmaschine ermöglicht. Es ist allerdings nicht zwingend erforderlich, dass alle Kugeltaschen eines Schnappkäfigs mit der gleichen Versetzung hergestellt werden. Insbesondere können eine oder mehrere Kugeltaschen mittels verschiedener Versetzungen quer zur Axialrichtung des ringförmigen Rohlings hergestellt werden.

Vorzugsweise ist das Maß c größer als das Maß b, insbesondere ist das Verhältnis von Maß b zu Maß c vorzugsweise klein und abhängig von der Lagergröße. Das Verhältnis von Maß b zu Maß c liegt im Bereich zwischen 0,5 (kleine Kugellager) und 0,02 (große Kugellager).

Vorteilhafterweise wird durch die Verhältnisse von Maß b zu Maß c erreicht, dass eine (in Axialrichtung des Rohlings) schmale, rückstellfähige Schnappkante ausgebildet werden kann, bzw. dass der vorstehende Teil der Schneide des Schneidwerkzeugs schmal ausgeführt werden kann, was für ein besseres Schneidverhalten sorgt.

Vorzugsweise ist das Verhältnis von Maß a zum Kugelkalottendurchmesser kleiner als 1, weiter vorzugsweise kleiner als 0.5. Weiter vorzugsweise beträgt das Verhältnis etwa 0.2. Es sind jedoch auch Verhältnisse von über 1 oder unter 0.05 möglich.

Vorteilhafterweise wird bei einem Verhältnis von Maß a zum Kugelkalottendurchmesser unter 1 beim ersten Absenken des rotierenden Schneidwerkzeugs um das Maß b in Axialrichtung des ringkreisförmigen Endabschnitts bzw. des ringförmigen Rohlings bereits Material abgetragen, bzw. bereits eine erste Bohrung erzeugt. Hierdurch wird das Einführen der Kugel in die fertige Kugeltasche erleichtert.

Weiter vorteilhafterweise kann durch eine Anpassung der Maße a und b sowie des Materials des ringkreisförmigen Endabschnitts bzw. des ringförmigen Rohlings die Schnappkraft der Schnappkante gezielt beeinflusst werden, so dass sichergestellt werden kann, dass sich die Schnappkraft des Schnappkäfigs in einem vorher festlegbaren Bereich bzw. innerhalb einer festlegbaren Toleranz befindet. Die optimale Schnappkraft hängt von der Größe der des Kugellagers ab und kann beispielsweise bei kleinen Kugellagern etwa 15 N, bei mittelgroßen Kugellagern etwa 60 N und bei größeren Kugellagern etwa 100 N betragen. Es sind aber auch Schnappkräfte von über 100 N, bzw. unter 15 N möglich.

Vorzugsweise weist die Schneide des Schneidwerkzeugs einen konisch aufweitenden Teil zwischen dem vorstehenden Teil und dem dazu zurückgesetzten Schaft auf.

Vorteilhafterweise wird durch diese Ausbildung der Schneide erreicht, dass die entstehende Schnappkante eine optimale Form hinsichtlich Elastizität, Festigkeit und Kontaktpunkt mit der Kugel erhält.

Vorzugsweise umfasst das Schneidwerkzeug zumindest eines der folgenden Materialien, und/oder zumindest eines der folgenden Beschichtungsmaterialien, bzw. eine Kombination von zwei oder mehreren der folgenden Materialien und/oder der folgenden Beschichtungsmaterialien:
- polykristalliner Diamant (PKD);
- kubisches Bornitrid (CBN);
- Carbidhartmetalle, wie beispielsweise Wolframcarbid (WC), Titancarbid (TiC), Tantalcarbid (TaC), Wolframcarbid-Cobalt (WCCO); Wolframcarbid-Kohlenstoff (WC/C)
- Nitridhartmetalle, wie beispielsweise Titannitrid (TiN), Titanaluminiumnitrid (TiAIN);
- Carbid-Nitrid-Hartmetalle, wie beispielsweise Titancarbidnitrid;
- Chromnitrid (CrN).

Vorteilhafterweise wird durch den Einsatz dieser Materialien eine hohe Lebensdauer des Schneidwerkzeugs bei hoher Schnittgenauigkeit erreicht.

Zur Herstellung eines Schnappkäfigs mit einer Schnappnut kann das Maß b größer dimensioniert werden, so dass über der Kugelkalotte genügend Material vorhanden ist, um in einem nächsten bzw. vorangehenden Arbeitsschritt die Schnappnut und die Schnappkante ausbilden zu können. Die Ausbildung der Schnappnut kann ebenfalls durch spanende Bearbeitung erfolgen.

Der Schnappring kann ebenfalls aus einem ringkreisförmigen Endabschnitt eines Halbzeugs mit den oben beschriebenen Eigenschaften spanend hergestellt werden. Das Material des Schnappring kann jedoch auch ein Metall umfassen. Es ist auch möglich, dass der Schnappring aus einem metallischen Flachmaterial umgeformt wird.

Ein weiterer Aspekt der Erfindung betrifft einen kugelgeführten Schnappkäfig für Kugellager, der zumindest eine spanend erzeugte Kugeltasche umfasst, wobei jede Kugeltasche eine im wesentlichen zylindrische Kugelkalotte und zumindest eine die Kugelkalotte teilweise abdeckende bzw. übergreifende bzw. überragende Schnappkante umfasst, die ein Einführen einer Kugel in die Kugelkalotte ermöglicht, wobei die Symmetrieachse der zylindrischen Kugelkalotte parallel zu der Symmetrieachse des Schnappkäfigs ist.

Es versteht sich, dass beim Zusammenbau eines Kugellagers zunächst Kugeln zwischen einem Innenring und einem Außenring des Kugellagers eingebracht werden. Innenring und Außenring des Kugellagers sind so ausgebildet, dass die Kugeln nach dem Einbringen nicht mehr aus dem Bereich zwischen Innenring und Außenring herausfallen können. Die Kugeln werden dann gemäß gewünschter Kugelteilung in Position gebracht und der Schnappkäfig wird zwischen Innenring und Außenring eingeführt bzw. hineingedrückt, wobei die Kugeln in die Kugeltaschen einschnappen. Vorteilhafterweise wird durch die zumindest eine Schnappkante verhindert, dass der Schnappkäfig aus dem fertig zusammengebauten Kugellager herausfallen kann. Um ein Herausfallen des Schnappkäfigs aus dem Kugellager zu verhindern kann es auch ausreichend sein, dass nur eine Kugeltasche des Schnappkäfigs zumindest eine Schnappkante aufweist.

Spanend erzeugt im Sinne der Erfindung bedeutet, dass die Kugeltasche durch Abtragen von Material hergestellt wird. Insbesondere kann die Kugeltasche dabei gefräst, gebohrt, gedreht oder geschnitten sein.

Vorzugsweise sind Kugelkalotte und Schnappkante einteilig ausgeführt, bzw. ist der Schnappkäfig, der Kugelkalotte und Schnappkante umfasst, einteilig ausgeführt.

Vorzugsweise umfasst bzw. besteht der ringförmige Rohling aus Kunststoffmaterial, weiter vorzugsweise aus baumwollgewebe- und papierverstärktem Phenolharz, Polyamidimid (PAI), Polyamid (PA), Polyoxymethylen (POM), Polyetherketon (PEK), Polyetheretherketon (PEEK), Polyimid (PI), Polyphenylensulfon (PPS) oder Polytetrafluorethylen (PTFE). Ebenso sind Blends aus oben genannten Polymeren denkbar. Die Kunststoffmaterialien können auch in gleitmodifizierter Form durch Beimengung von Gleitadditiven und/oder Fasern vorliegen.

Vorteilhafterweise können für den Schnappkäfig Kunststoffmaterialien verwendet werden, welche Hochleistungswerkstoffe sind und hervorragende Eigenschaften hinsichtlich der Verwendung in einem Kugellager aufweisen, jedoch nicht spritzgießfähig sind bzw. Probleme beim Spritzgießen mit sich bringen. Durch die Verwendung dieser Materialien erzeugt der Schnappkäfig ein geringes Reibmoment, besitzt eine hohe Lebensdauer und sorgt für einen geräuscharmen Lauf des Kugellagers.

Vorzugsweise umfasst der kugelgeführte Schnappkäfig weiter einen Schnappring, welcher über zumindest eine Schnappnut formschlüssig mit dem Schnappkäfig verbindbar ist, um ein radiales Auseinanderbiegen von zumindest einem Steg, welcher eine Seitenwand der zumindest einen Kugelkalotte ausbildet, zu verhindern.

Vorteilhafterweise kann durch den Schnappring und die Schnappnut verhindert werden, dass sich die Stege, i.e. die frei stehenden Teile des Schnappkäfigs, welche durch die spanende Erzeugung der Kugeltaschen entstehen, sich auch bei hohen Drehzahlen nicht radial nach außen verbiegen.

Vorzugsweise ist die zumindest eine Schnappnut an einem freien Ende des zumindest einen Stegs angeordnet.

Vorzugsweise ist die zumindest eine Schnappnut in Radialrichtung des Schnappkäfigs nach außen gerichtet.

Vorzugsweise weist der Schnappring etwa den gleichen Außendurchmesser wie der Schnappkäfig auf. Die Innenkontur des Schnapprings ist vorzugsweise der Kontur der Schnappnut bzw. des Schnapp-Hinterschnitts entsprechend ausgebildet.

Vorzugsweise umfasst der Schnappkäfig mehrere Kugeltaschen, wobei alle Stege zwischen den Kugelkalotten am freien Ende eine Schnappnut aufweisen, in die der Schnappring einschnappt bzw. einrastet. Wenn die Stege bei hohen Drehzahlen eine Fliehkraft erfahren, können sie sich am Schnappring abstützen. Vorteilhafterweise kann hierdurch gewährleistet werden, dass sich auch die Schnappkanten bzw. die Seitenwände der Kugelkalotten nicht auseinanderbiegen, so dass verhindert werden kann, dass diese an der Außenringschulter des Kugellagers anstreifen und das Kugellager abbremsen bzw. dass diese bedingt durch mangelnde Biegefestigkeit des Werkstoffs des Schnappkäfigs abbrechen bzw. dass der Schnappkäfig aus der Schnappverbindung mit dem Kugelsatz herausschnappt.

Ein weiterer Aspekt der Erfindung betrifft ein Kugellager, umfassend einen Innenring, einen koaxial dazu angeordneten Außenring und zwischen dem Innenring und dem Außenring angeordneten Kugeln, wobei die Kugeln mittels des oben beschriebenen Schnappkäfigs auf Position gehalten werden.

Vorzugsweise ist das Kugellager ein Rillenkugellager.

Ein weiterer Aspekt der Erfindung betrifft die Verwendung des nach dem oben beschriebenen Verfahren hergestellten Schnappkäfigs oder des oben beschriebenen Schnappkäfigs in einem Kugellager für hochtourige Dentalwerkzeuge oder für Fluidmesszähler, insbesondere Gas- oder Windmesszähler.

Vorteilhafterweise sind die oben beschriebenen Schnappkäfige aufgrund des geringen Reibmoments, der Möglichkeit zur Verwendung von Hochleistungsmaterialien sowie der geringen Unwuchten bestens für die Verwendung in einem Kugellager für hochtourige Dentalwerkzeuge oder für Fluidmesszähler, insbesondere Gas- oder Windmesszähler, geeignet. Bei den Dentalwerkzeugen ist die geringe Wärmeentwicklung ein zusätzlicher Vorteil.

Die Merkmale der einzelnen Aspekte der Erfindung sind frei kombinierbar. Insbesondere können einzelne Merkmale der Aspekte zu einem weiteren Aspekt der Erfindung kombiniert werden.

Im Nachfolgenden werden bevorzugte Ausführungsformen der Erfindung anhand der Figuren genauer beschrieben.

### Figurenbeschreibung

Es zeigen:
- Fig.1:: Einen schultergeführten Schnappkäfig gemäß dem Stand der Technik
- Fig.2:: Einen kugelgeführten Schnappkäfig gemäß dem Stand der Technik
- Fig.3:: Eine erste Ausführungsform des kugelgeführten Schnappkäfigs gemäß der Erfindung
- Fig.4:: Eine zweite Ausführungsform des kugelgeführten Schnappkäfigs gemäß der Erfindung
- Fig.5:: Eine dritte Ausführungsform des kugelgeführten Schnappkäfigs gemäß der Erfindung
- Fig.6:: Ein Schneidwerkzeug während der Erzeugung der Kugeltasche
- Fig.7:: Einen Schnappkäfig gemäß der ersten Ausführungsform mit eingeführter Kugel
- Fig.8:: Eine vierte Ausführungsform des kugelgeführten Schnappkäfigs gemäß der Erfindung
- Fig.9:: Einen Querschnitt des Stegs und des Schnapprings im verbundenen Zustand entlang der Schnittlinie A-A in Figur 8

Fig. 1 zeigt einen schultergeführten Schnappkäfig 2 aus Kunststoff gemäß dem Stand der Technik. Wie in Fig. 1 zu sehen ist, weist ein derartiger Schnappkäfig 2 radiale Bohrungen 4, 6 auf, wobei die Bohrung 4 die Kugelkalotte darstellt, und die Gegenbohrung 6 dazu dient, eine Schnappkante 8 zum Einführen der Kugeln auszubilden.

Das in Figur 1 gezeigte Design hat die in der eingangs diskutierten Nachteile, die im wesentlichen darauf zurückzuführen sind, dass die Kugeln den Käfig nicht führen können, so dass ein Kontakt zwischen Käfig und Innenring bzw. Außenring des Kugellagers entsteht.

Fig. 2 zeigt einen kugelgeführten Schnappkäfig 10 gemäß dem Stand der Technik, der im Spritzgießverfahren hergestellt wurde. Durch die Herstellung im Spritzgießverfahren ist es möglich, die Kugelkalotten 12 an die Rundung der Kugel 14 anzupassen und zugleich ein Einschnappen der Kugeln 14 in die Kugelkalotten 12 zu ermöglichen.

Der kugelgeführte Schnappkäfig 10 verfügt nicht über die nachteiligen Eigenschaften der schultergeführten Schnappkäfige und ist daher den schultergeführten Käfigvarianten technisch überlegen. Der kugelgeführte Käfig 10 ist jedoch im Spritzgießverfahren hergestellt. Die verfahrensbedingten Nachteile beim Spritzgießen wurden eingangs bereits diskutiert.

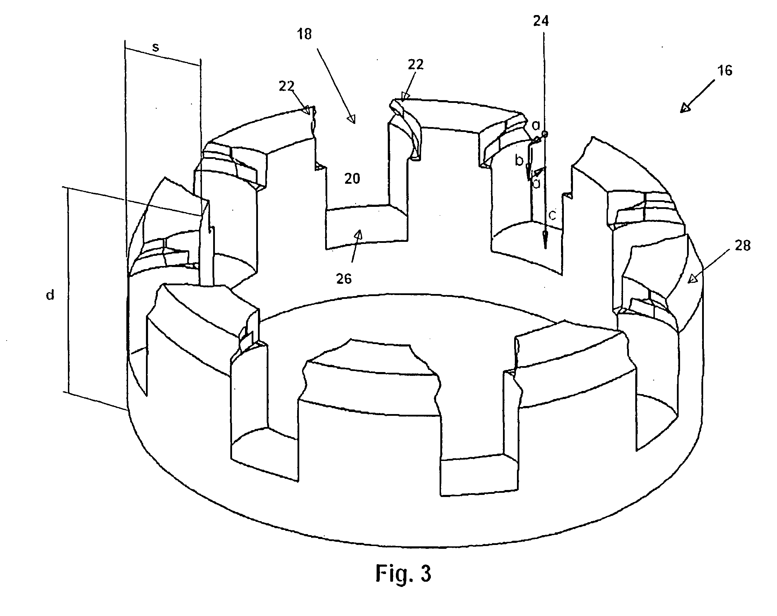

Fig. 3 zeigt eine erste Ausführungsform eines erfindungsgemäßen Schnappkäfigs 16. Die mit a, b und c beschrifteten Pfeile zeigen den Weg an, entlang dem das Schneidwerkzeug zur Erzeugung der Kugeltasche 18 verfährt. Die Kugeltasche 18 umfasst eine Kugelkalotte 20 und zwei Schnappkanten 22, die über die Kugelkalotte 20 ragen. Das Schneidwerkzeug wird - um das Maß a von der Kalottenmittellinie 24 in Richtung des Symmetriemittelpunkts des Schnappkäfigs 16 versetzt - um das Maß b in Axialrichtung des Schnappkäfigs 16 abgesenkt, danach um das Maß a radial zur Kalottenmittellinie 24 verfahren, und dann weiter um das Maß c in Axialrichtung des Schnappkäfigs 16 abgesenkt. Der gezeigte Schnappkäfig 16 kann auch ein bearbeiteter ringkreisförmiger Endabschnitt eines Halbzeugs sein, wird hier aber als ringförmiger Rohling beschrieben. Die Höhe d des Schnappkäfigs 16 in seiner Axialrichtung ist größer als die Summe von b und c. Die Kugeltasche 18 weist einen Kalottengrund 26 auf und ist gegenüber dem Kalottengrund 26 geöffnet, wobei die Öffnung teilweise von den Schnappkanten 22 abgedeckt bzw. übergriffen bzw. überragt wird. Ferner ist die Stärke s des Schnappkäfigs 16 bzw. des ringförmigen Rohlings in seiner Radialrichtung geringer als der Durchmesser der Kugelkalotten 20, so dass die Kugeln im eingeführten Zustand beidseitig aus der Kugelkalotte 20 herausstehen können, um in Kontakt mit der Innenringlaufbahn bzw. der Außenringlaufbahn des Kugellagers kommen zu können. Entlang der oberen Außenkante weist der Schnappkäfig 16 eine Phase 28 auf. Der Schnappkäfig 16 kann allerdings auch ohne die Phase 28 ausgeführt sein.

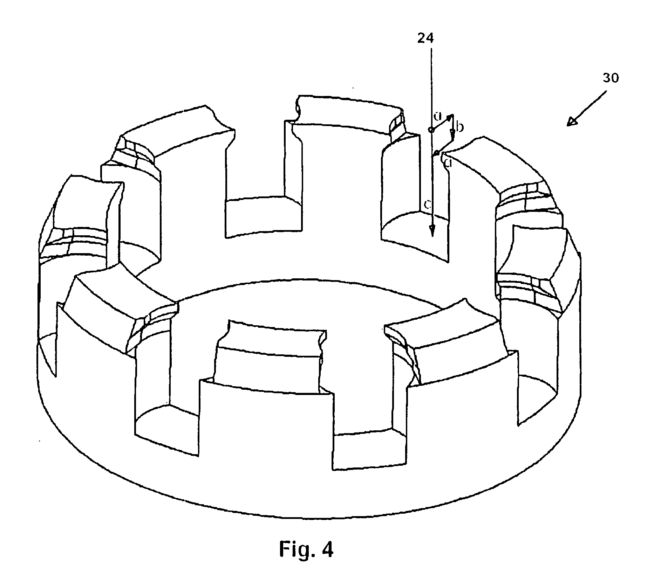

Fig. 4 zeigt eine zweite Ausführungsform eines erfindungsgemäßen Schnappkäfigs 30. Der Unterschied zur ersten Ausführungsform liegt darin, dass das Schneidwerkzeug - um das Maß a von der Kalottenmittellinie 24 radial nach außen versetzt - um das Maß b in Axialrichtung des Schnappkäfigs 30 abgesenkt wird, bevor es um das Maß a radial zur Kalottenmittellinie 24 verfährt und dann weiter um das Maß c in Axialrichtung des Schnappkäfigs 30 abgesenkt wird.

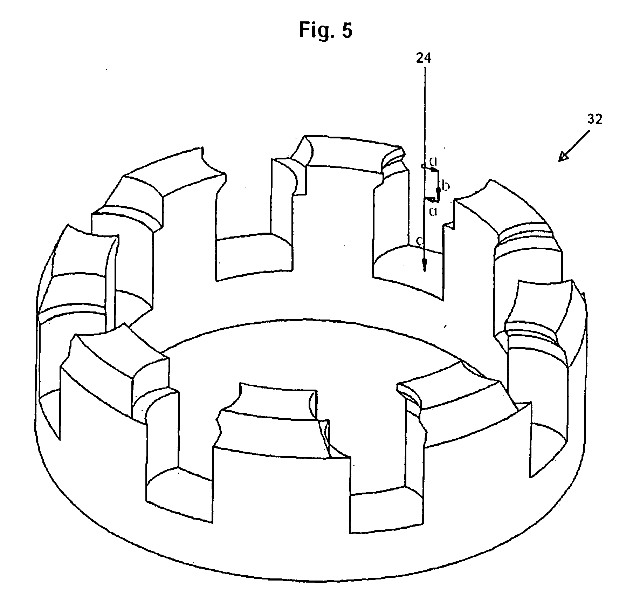

Fig. 5 zeigt eine dritte Ausführungsform eines erfindungsgemäßen Schnappkäfigs 32. Der Unterschied zur ersten Ausführungsform liegt darin, dass das Schneidwerkzeug - um das Maß a von der Kalottenmittellinie 24 seitlich in Richtung der benachbarten Kugelkalotte bzw. seitlich in Tangentialrichtung des Teilkreises des ringförmigen Rohlings versetzt - um das Maß b in Axialrichtung des Schnappkäfigs 32 abgesenkt wird, bevor es um das Maß a radial zur Kalottenmittellinie 24 verfährt und dann weiter um das Maß c in Axialrichtung des Schnappkäfigs 32 abgesenkt wird.

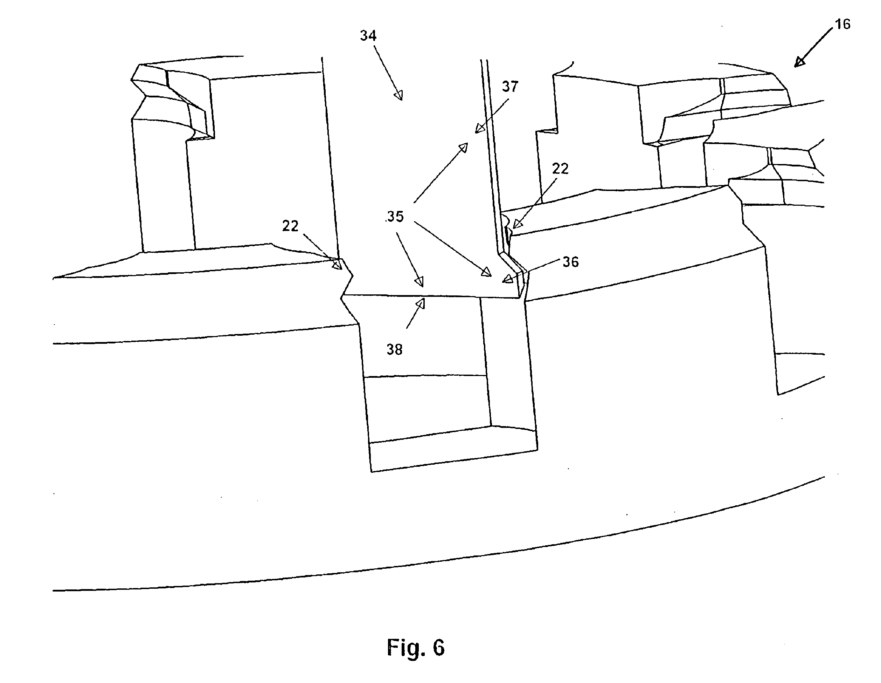

Fig. 6 zeigt ein Schneidwerkzeug 34 während der Bearbeitung des Schnappkäfigs 16 bzw. eines ringförmigen Rohlings. Entsprechendes gilt auch für die Bearbeitung eines ringkreisförmigen Endabschnitts eines Halbzeugs. Das Schneidwerkzeug 34 hat hierbei bereits die Kugelkalotte 20 erzeugt bzw. gebohrt und wurde wieder um ein bestimmtes Maß, beispielsweise das Maß c aus den Figuren 3 bis 5, in Axialrichtung des Schnappkäfigs 16 hochgefahren. Durch die Schneide 35 bzw. den vorstehenden Teil 36 und den dazu zurückgesetzten Schaft 37 des Schneidwerkzeugs 34 wurde ein Hinterschnitt gebildet bzw. wurden die Schnappkanten 22 ausgebildet. Das freie Ende 38 des Schneidwerkzeugs 34 ist hierbei plan und orthogonal zur Längsachse des Schneidwerkzeugs 34, kann aber auch spitze oder rundliche Vertiefungen bzw. Vorsprünge haben, um die Form des Kalottengrunds entsprechend auszugestalten. Der vorstehende Teil 36, der zurückgesetzte Schaft 37 und das freie Ende 38 bilden die Schneide 35 aus.

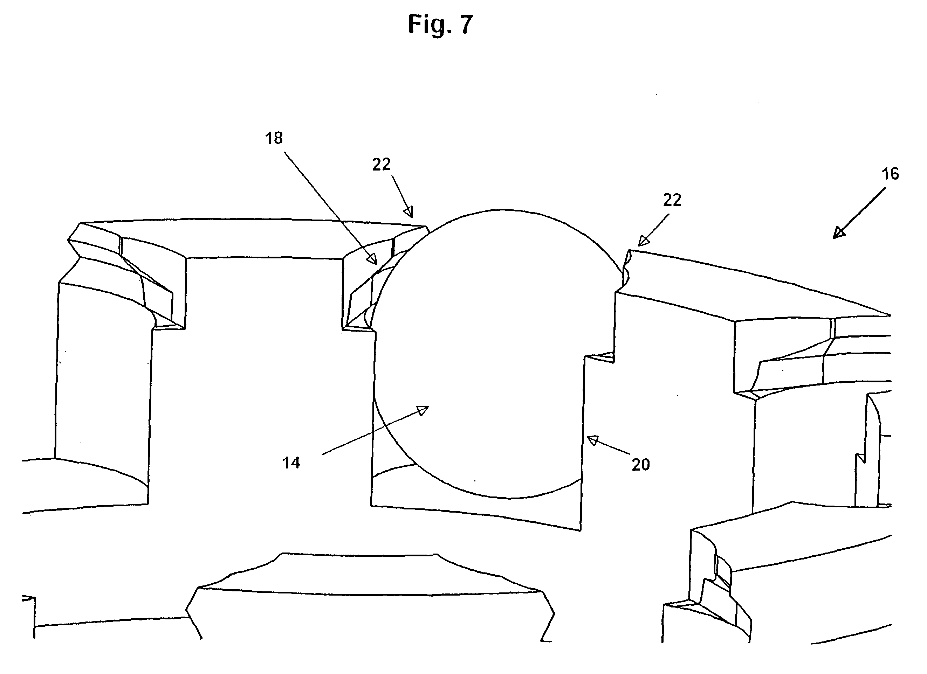

Fig. 7 zeigt eine erste Ausführungsform des Schnappkäfigs 16, wobei eine Kugel 14 in die Kugeltasche 18 eingeführt wurde. Die Kugel 14 wird durch die Seitenwände der Kugelkalotte 20 eng umschlossen. Der Schnappkäfig 16 kann so durch die Kugel 14 geführt werden. Die Schnappkanten 22 verhindern, dass der Schnappkäfig 16 nach der Montage aus dem Kugellager herausfallen kann. In Radialrichtung des Schnappkäfigs 16 nach innen und nach außen schaut die Kugel 14 aus dem Schnappkäfig 16 heraus bzw. Abschnitte der Kugel 14 stehen beidseits aus dem Schnappkäfig 16 in Radialrichtung hervor. Im eingebauten Zustand ist somit die Kugel 14 in Kontakt mit der Innenringlaufbahn und der Außenringlaufbahn des Kugellagers, wobei der Schnappkäfig 16 durch die Kugel 14 geführt wird bzw. sich auf der Kugel 14 abstützt und somit nicht mit dem Innenring oder dem Außenring des Kugellagers in Kontakt kommt.

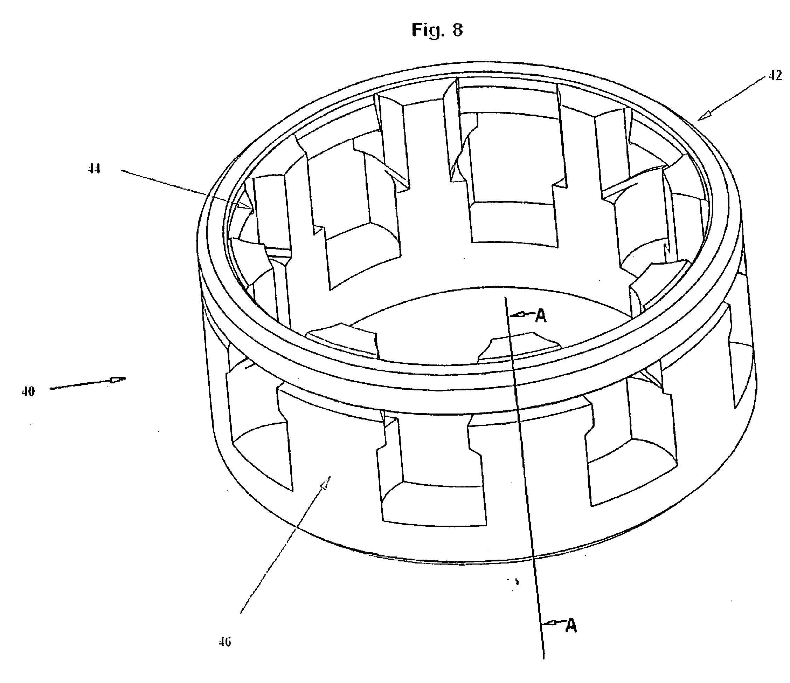

Fig. 8 zeigt eine vierte Ausführungsform des Schnappkäfigs 40, welcher zusätzlich einen Schnappring 42 umfasst, welcher ein radiales Auseinanderbiegen der Stege 46, welche die Seitenwände der Kugelkalotten ausbilden, verhindern kann. Fig. 8 zeigt den Schnappkäfig 40 und den Schnappring 42 im formschlüssig verbundenen Zustand. Zum Verbinden wird der Schnappring 42 achsparallel auf den Schnappkäfig 40 aufgepresst, so dass der Schnappring 42 durch elastische Verformung der Stege 46 und/oder des Schnapprings 42 in die Schnappnuten 44, welche jeweils am freien Ende der Stege 46 ausgebildet sind, einschnappen bzw. einrasten kann.

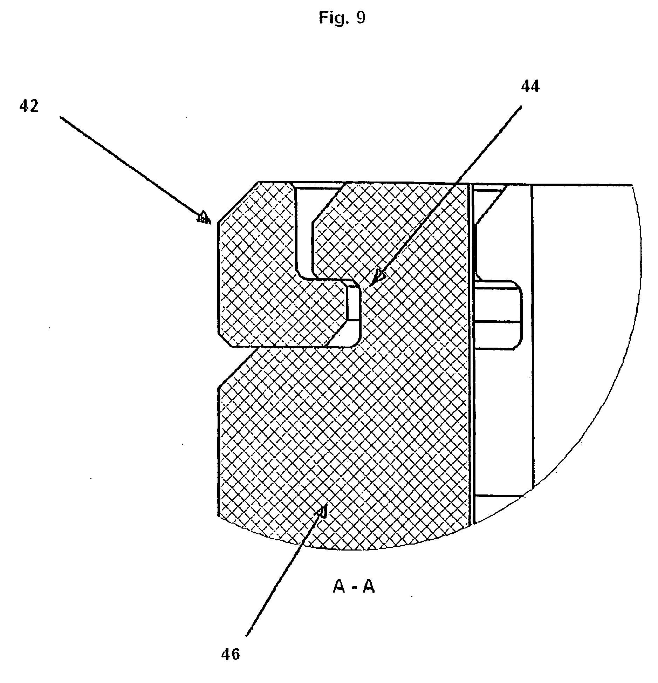

Fig. 9 ist eine Querschnittdarstellung eines Steges 46 und des Schnapprings 42 entlang der Schnittlinie A-A in Fig. 8. Im verbundenen Zustand ist ein hervorstehender Teil des Schnapprings 42 in die Schnappnut 44 eingeführt. Die Öffnung der Schnappnut 44 ist radial nach außen gerichtet. Damit der Schnappring 42 einfacher in die Schnappnut 44 einschnappen bzw. einrasten kann, ist die untere Kante des hervorstehenden Teils des Schnapprings 42, sowie die obere, radial nach außen gerichtete Kante des Stegs 46 mit Phasen versehen.

Die in den Ausführungsformen genannten Merkmale beziehen sich nicht ausschließlich auf die jeweilige Ausführungsform, sondern können frei mit den Merkmalen der anderen Ausführungsformen zu weiteren Ausführungsformen kombiniert werden.

### Bezugszeichenliste

- 2: schultergeführter Schnappkäfig gemäß dem Stand der Technik
- 4: radiale Bohrung
- 6: radiale Gegenbohrung
- 8: Schnappkante (Stand der Technik)
- 10: kugelgeführter, spritzgegossener Schnappkäfig gemäß dem Stand der Technik
- 12: spritzgegossene Kugelkalotte
- 14: Kugel
- 16: Schnappkäfig erste Ausführungsform
- a: Maß a
- b: Maß b
- c: Maß c
- d: Höhe des Schnappkäfigs/Rohlings/Endabschnitts in Axialrichtung
- s: Stärke des Schnappkäfigs/Rohlings/Endabschnitts in Radialrichtung
- 18: Kugeltasche
- 20: Kugelkalotte
- 22: Schnappkante
- 24: Kalottenmittellinie
- 26: Kalottengrund
- 28: Phase
- 30: Schnappkäfig zweite Ausführungsform
- 32: Schnappkäfig dritte Ausführungsform
- 34: Schneidwerkzeug
- 35: Schneide
- 36: vorstehender Teil der Schneide
- 37: zurückgesetzter Schaft der Schneide
- 38: freies Ende der Schneide
- 40: Schnappkäfig vierte Ausführungsform
- 42: Schnappring
- 44: Schnappnut
- 46: Steg

## Patentansprüche

1. Verfahren zum Herstellen eines kugelgeführten Schnappkäfigs (16, 30, 32) für Kugellager mit den folgenden Schritten:
- Bereitstellen eines Halbzeugs mit ringkreisförmigem Endabschnitt oder eines ringförmigen Rohlings;
- Bereitstellen eines Schneidwerkzeugs (34), welches eine durchgehende Schneide (35), umfassend einen am freien Ende (38) des Schneidwerkzeugs (34) vorstehenden Teil (36) und einen dazu zurückgesetzten Schaft (37), aufweist;
- Erzeugen von mindestens einer Kugeltasche (18) mittels des Schneidwerkzeugs (34), umfassend eine im wesentlichen zylindrischen Kugelkalotte (20) und zumindest eine die Kugelkalotte (20) teilweise abdeckende Schnappkante (22), wobei das Erzeugen der Kugeltasche (18) die folgenden Schritte umfasst:
- Absenken des rotierenden Schneidwerkzeugs (34) in Axialrichtung des ringkreisförmigen Endabschnitts bzw. des ringförmigen Rohlings bis um ein Maß b unterhalb der Oberkante des ringkreisförmigen Endabschnitts bzw. des ringförmigen Rohlings, wobei der Rotationsmittelpunkt des Schneidwerkzeugs (34) um ein Maß a von einem vorbestimmbaren Kugelkalottenmittelpunkt quer zur Axialrichtung des ringkreisförmigen Endabschnitts bzw. des ringförmigen Rohlings versetzt ist;
- Verfahren des rotierenden Schneidwerkzeugs (34) quer zur Axialrichtung des ringkreisförmigen Endabschnitts bzw. des ringförmigen Rohlings um das Maß a derart, dass der Rotationsmittelpunkt des Schneidwerkzeugs (34) und der vorbestimmbare Kugelkalottenmittelpunkt übereinstimmen;
- weiteres Absenken des rotierenden Schneidwerkzeugs (34) in Axialrichtung des ringkreisförmigen Endabschnitts bzw. des ringförmigen Rohlings um ein Maß c unter Ausbildung der Kugelkalotte (20).

2. Verfahren zum Herstellen eines kugelgeführten Schnappkäfigs (16, 30, 32) nach Anspruch 1, wobei das Schneidwerkzeug (34) nach Erzeugen der Kugeltasche (18) in umgekehrter Reihenfolge aus der Kugeltasche (18) herausgefahren wird.

3. Verfahren zum Herstellen eines kugelgeführten Schnappkäfigs (16, 30, 32) nach Anspruch 1 oder 2, wobei das Halbzeug mit ringkreisförmigem Endabschnitt bzw. der ringförmige Rohling aus Kunststoffmaterial, vorzugsweise baumwollgewebe- bzw. papierverstärktes Phenolharz, Polyamidimid (PAI), Polyamid (PA), Polyoxymethylen (POM), Polyetherketon (PEK), Polyetheretherketon (PEEK), Polyimid (PI), Polyphenylensulfon (PPS) oder Polytetrafluorethylen (PTFE) besteht.

4. Verfahren zum Herstellen eines kugelgeführten Schnappkäfigs (16, 30, 32) nach einem der vorangehenden Ansprüche, wobei beim Herstellen der zumindest einen Kugeltasche (18) das Absenken des rotierenden Schneidwerkzeugs (34) in Axialrichtung des ringkreisförmigen Endabschnitts bzw. des ringförmigen Rohlings bis um das Maß b unterhalb der Oberkante des ringkreisförmigen Endabschnitts bzw. des ringförmigen Rohlings derart erfolgt, dass der Rotationsmittelpunkt des Schneidwerkzeugs (34) um das Maß a von dem vorbestimmbaren Kugelkalottenmittelpunkt quer zur Axialrichtung des ringkreisförmigen Endabschnitts bzw. des ringförmigen Rohlings entweder
in Richtung des Symmetriemittelpunkts des ringkreisförmigen Endabschnitts bzw. des ringförmigen Rohlings versetzt ist oder
in Radialrichtung des ringkreisförmigen Endabschnitts bzw. des ringförmigen Rohlings nach außen versetzt ist oder
seitlich in Tangentialrichtung des Teilkreises des ringkreisförmigen Endabschnitts bzw. des ringförmigen Rohlings versetzt ist.

5. Verfahren zum Herstellen eines kugelgeführten Schnappkäfigs (16, 30, 32) nach einem der vorangehenden Ansprüche, wobei das Maß c größer ist als das Maß b, insbesondere das Verhältnis von Maß b zu Maß c klein ist.

6. Verfahren zum Herstellen eines kugelgeführten Schnappkäfigs (16, 30, 32) nach einem der vorangehenden Ansprüche, wobei das Verhältnis von Maß b zu Maß c im Bereich zwischen 0,5 und 0,02 liegt.

7. Verfahren zum Herstellen eines kugelgeführten Schnappkäfigs (16, 30, 32) nach einem der vorangehenden Ansprüche, wobei das Verhältnis von Maß a zum Kugelkalottendurchmesser kleiner ist als 1, vorzugsweise kleiner ist als 0,5, weiter vorzugsweise etwa 0,2 beträgt

8. Verfahren zum Herstellen eines kugelgeführten Schnappkäfigs (16, 30, 32) nach einem der vorangehenden Ansprüche, wobei die Schneide (35) des Schneidwerkzeugs (34) einen konisch aufweitenden Teil zwischen dem vorstehenden Teil (36) und dem dazu zurückgesetzten Schaft (37) aufweist.

9. Verfahren zum Herstellen eines kugelgeführten Schnappkäfigs (16, 30, 32) nach einem der vorangehenden Ansprüche, wobei das Schneidwerkzeug (34) zumindest eines der folgenden Materialien und/oder zumindest eines der folgenden Beschichtungsmaterialien bzw. eine Kombination von zwei oder mehreren der folgenden Materialien und/oder der folgenden Beschichtungsmaterialien umfasst:
- polykristalliner Diamant (PKD);
- kubisches Bornitrid (CBN);
- Carbidhartmetalle, wie beispielsweise Wolframcarbid (WC), Titancarbid (TiC), Tantalcarbid (TaC), Wolframcarbid-Cobalt (WCCO), Wolframcarbid-Kohlenstoff (WC/C);
- Nitridhartmetalle, wie beispielsweise Titannitrid (TiN), Titanaluminiumnitrid (TiAIN);
- Carbid-Nitrid-Hartmetalle, wie beispielsweise Titancarbidnitrid (TiCN);
- Chromnitrid (CrN).

10. Kugelgeführter Schnappkäfig (16, 30, 32) für Kugellager, der zumindest eine spanend erzeugte Kugeltasche (18) umfasst, wobei die Kugeltasche (18) eine im wesentlichen zylindrische Kugelkalotte (20) und zumindest eine die Kugelkalotte (20) teilweise abdeckende Schnappkante (22) umfasst, die ein Einführen einer Kugel (14) in die Kugelkalotte (20) ermöglicht, wobei die Symmetrieachse der zylindrischen Kugelkalotte (20) parallel zu der Symmetrieachse des Schnappkäfigs (16, 30, 32) ist,
wobei die Kugeltasche (18) mittels eines rotierenden Schneidwerkzeugs (34), welches eine durchgehende Schneide (35), umfassend einen am freien Ende (38) des Schneidwerkzeugs (34) vorstehenden Teil (36) und einen dazu zurückgesetzten Schaft (37), aufweist, erzeugt wird, wobei durch den vorstehenden Teil (36) und den dazu zurückgesetzten Schaft (37) des Schneidwerkzeugs (34) die Schnappkante (22) ausgebildet wird.

11. Kugellager, umfassend einen Innenring, einen koaxial dazu angeordneten Außenring und zwischen dem Innenring und dem Außenring angeordneten Kugeln, wobei die Kugeln (14) mittels nach einem Verfahren der Ansprüche 1 bis 9 hergestellten kugelgeführten Schnappkäfigs (16, 30, 32) oder mittels eines Schnappkäfigs (16, 30, 32) nach Anspruch 10 auf Position gehalten werden.

12. Kugellager nach Anspruch 11, wobei das Kugellager ein Rillenkugellager ist.

13. Verwendung eines nach einem Verfahren der Ansprüche 1 bis 9 hergestellten kugelgeführten Schnappkäfigs (16, 30, 32) oder eines Schnappkäfigs (16, 30, 32) nach Anspruch 10 in einem Kugellager für hochtourige Dentalwerkzeuge oder für Fluidmesszähler, insbesondere Gas- oder Windmesszähler.

## Claims

1. A method of producing a ball-guided snap cage (16, 30, 32) for ball bearings including the steps of:
- providing a semi-finished product having a circular ring-shaped end section or a ring-shaped blank;
- providing a cutting tool (34) comprising a continuous blade (35) including a protruding part (36) at a free end of the cutting tool (34) and a shaft (37) recessed in respect to the same;
- producing at least one ball recess (18) by means of the cutting tool (34) including an essentially cylindrical spherical cap (20) and at least one snapping edge (22) partially covering the spherical cap (20), wherein generating the ball recess (18) comprising the steps of:
- lowering the rotating cutting tool (34) in the axial direction of the circular ring-shaped end section or the ring-shaped blank by a measure b below the upper edge of the circular ring-shaped end section or the ring-shaped blank, the rotation centre of the cutting tool (34) being displaced by a measure a from a pre-determinable centre point of the spherical cap crosswise to the axial direction of the circular ring-shaped end section or the ring-shaped blank;
- driving the rotating cutting tool (34) crosswise to the axial direction of the circular ring-shaped end section or the ring-shaped blank by the measure a in such a manner, that the rotation centre of the cutting tool (34) and the pre-determinable centre point coincide;
- further lowering the rotating cutting tool (34) in the axial direction of the circular ring-shaped end section or the ring-shaped blank by a measure c forming the spherical cap.

2. The method of producing a ball-guided snap cage (16, 30, 32) according to claim 1, wherein the cutting tool (34) is backed out in reverse order from the ball recess (18) after having produced the ball recess (18).

3. The method of producing a ball-guided snap cage (16, 30, 32) according to claim 1 or 2, wherein the semi-finished product including the circular ring-shaped end section or the ring-shaped blank is made of plastics material, preferably cotton fabric or paper reinforced phenolic resin, polymide-imide (PAI), polyamide (PA), polyoxymethylene (POM), polyether ketone (PEK), polyetheretherketone (PEEK), polyimide (PI), polyphenylene sulfone (PPS) or polytetrafluoroethylene (PTFE).

4. The method of producing a ball-guided snap cage (16, 30, 32) according to any of the preceding claims, wherein in producing the at least one ball recess (18) lowering of the rotating cutting tool (34) in the axial direction of the circular ring-shaped end section or the ring-shaped blank by a measure b below the upper edge of the circular ring-shaped end section or the ring-shaped blank occurs in a such a manner that the rotation centre of the cutting tool (34) is displaced from the pre-determinable centre point of the spherical cap crosswise the axial direction of the circular ring-shaped end section or the ring-shaped blank by a measure a either
towards the centre of symmetry of the circular ring-shaped end section or the ring-shaped blank or
radially outward of the circular ring-shaped end section or a ring-shaped blank or
laterally in the tangential direction of the pitch circle of the circular ring-shaped end section or the ring-shaped blank.

5. The method of producing a ball-guided snap cage (16, 30, 32) according to any of the preceding claims, wherein the measure c is greater than the measure b, in particular the ratio of the measure b to the measure c being small.

6. The method of producing a ball-guided snap cage (16, 30, 32) according to any of the preceding claims, wherein the ratio of the measure b to the measure c being in a range of 0.5 to 0.02.

7. The method of producing a ball-guided snap cage (16, 30, 32) according to any of the preceding claims, wherein the ratio of the measure a to the diameter of the spherical cap is smaller than 1, preferably smaller than 0.5, further preferably about 0.2.

8. The method of producing a ball-guided snap cage (16, 30, 32) according to any of the preceding claims, the edge (35) of the cutting tool (34) comprising a conically expanding part between the protruding part (36) and the shaft (37) being recessed in respect to the same.

9. The method of producing a ball-guided snap cage (16, 30, 32) according to any of the preceding claims, wherein the cutting tool (34) comprises at least one of the following materials and/or at least one of the following coating materials or a combination of two or more of the following materials and/or the following coating materials:
- polycrystalline diamond (PKD);
- cubic boron nitride;
- carbid-based hard metals, such as tungsten carbide (WC), titanium carbide (TiC), tantalum carbide (TaC), tungsten carbide-cobalt (WCCo), tungsten carbide carbon (WC/C);
- nitride-based hard metals, such as titanium nitride (TiN), titanium aluminium nitride (TiAIN);
- carbide-nitride-based hard metals, such as titanium carbide nitride (TiCN);
- chromium nitride.

10. A ball-guided snap cage (16, 30, 32) for ball bearings including at least one machined ball recess (18), the ball recess (18) including an essentially cylindrical spherical cap (20) and at least one snapping edge (22) partially covering the spherical cap (20), and enabling the insertion of a ball (14) into the spherical cap (20), the axis of symmetry of the cylindrical spherical cap (20) being parallel to the axis of symmetry of the snap cage (16, 30, 32),
wherein the ball recess is produced by means of a rotating cutting tool (34) comprising a continuous blade (35) including a protruding part (36) at a free end of the cutting tool (34) and a shaft (37) recessed in respect to the same, the snapping edge (22) being formed by the protruding part (36) and the shaft (37) of the cutting tool (34) recessed in respect in respect to the same.

11. A ball bearing including an inner race, an outer race arranged coaxially to the same and balls being arranged between the inner race and the outer race, the balls (14) being supported in place by means of a ball-guided snap cage (16, 30, 32) produced according to any of claims 1 to 9 or by means of a snap cage (16, 30, 32) according to claim 10.

12. The ball bearing according to claim 11, the ball bearing being a deep groove ball bearing.

13. The usage of a ball-guided snap cage (16, 30, 32) produced according to any of claims 1 to 9 or of a snap cage (16, 30, 32) according to claim 10 in a ball bearing for high-speed dental tools or for fluid flow meters, in particular gas or wind meters.

## Revendications

1. Procédé de fabrication d'une cage « snap » guidée sur billes (16, 30, 32) pour roulements à billes avec les étapes suivantes :
- mise à disposition d'un produit semi-fini avec une section d'extrémité en forme de cercle annulaire ou d'une ébauche annulaire ;
- mise à disposition d'un outil de coupe (34) qui présente une lame continue (35), comprenant une partie saillante (36) à l'extrémité libre (38) de l'outil de coupe (34) et un arbre (37) reculé par rapport à celle-ci ;
- génération d'au moins une poche sphérique (18) au moyen de l'outil de coupe (34), comprenant une calotte sphérique essentiellement cylindrique (20) et au moins une arête à enclenchement (22) recouvrant partiellement la calotte sphérique (20), dans lequel la génération de la poche sphérique (18) comprend les étapes suivantes :
- abaissement de l'outil de coupe rotatif (34) dans le sens axial de la section d'extrémité en forme de cercle annulaire ou de l'ébauche annulaire jusqu'à une dimension b en dessous de l'arête supérieure de la section d'extrémité en forme de cercle annulaire ou de l'ébauche annulaire, dans lequel le centre de rotation de l'outil de coupe (34) est décalé d'une dimension a d'un centre de calotte sphérique pouvant être prédéterminé de manière transversale au sens axial de la section d'extrémité en forme de cercle annulaire ou de l'ébauche annulaire ;
- déplacement de l'outil de coupe rotatif (34) de manière transversale au sens axial de la section d'extrémité en forme de cercle annulaire ou de l'ébauche annulaire de la mesure a de telle sorte que le centre de rotation de l'outil de coupe (34) et le centre de calotte sphérique pouvant être prédéterminé concordent ;
- abaissement supplémentaire de l'outil de coupe rotatif (34) dans le sens axial de la section d'extrémité en forme de cercle annulaire ou de l'ébauche annulaire d'une dimension c en formant la calotte sphérique (20).

2. Procédé de fabrication d'une cage « snap » guidée sur billes (16, 30, 32) selon la revendication 1, dans lequel l'outil de coupe (34) est sorti de la poche sphérique (18) dans l'ordre inverse après génération de la poche sphérique (18).

3. Procédé de fabrication d'une cage « snap » guidée sur billes (16, 30, 32) selon la revendication 1 ou 2, dans lequel le produit semi-fini se compose avec la section d'extrémité en forme de cercle annulaire ou l'ébauche annulaire d'un matériau synthétique, de préférence de la résine phénolique renforcée avec du tissu de coton ou du papier, du polyamide-imide (PAI), de la polyamide (PA), du polyoxyméthylène (POM), de la polyéthercétone (PEK), de la polyétheréthercétone (PEEK), du polyimide (PI), de la polyphénylènesulfone (PPS) ou du polytétrafluoroéthylène (PTFE).

4. Procédé de fabrication d'une cage « snap » guidée sur billes (16, 30, 32) selon une des revendications précédentes, dans lequel, lors de la fabrication de l'au moins une poche sphérique (18), l'abaissement de l'outil de coupe rotatif (34) dans le sens axial de la section d'extrémité en forme de cercle annulaire ou de l'ébauche annulaire jusqu'à la dimension b en dessous de l'arête supérieure de la section d'extrémité en forme de cercle annulaire ou de l'ébauche annulaire s'effectue de telle sorte que le centre de rotation de l'outil de coupe (34) est décalé de la dimension a du centre de calotte sphérique pouvant être prédéterminé de manière transversale au sens axial de la section d'extrémité en forme de cercle annulaire ou de l'ébauche annulaire
en direction du centre de symétrie de la section d'extrémité en forme de cercle annulaire ou de l'ébauche annulaire, ou
est décalé vers l'extérieur dans le sens radial de la section d'extrémité en forme de cercle annulaire ou de l'ébauche annulaire, ou
est décalé latéralement dans le sens tangentiel du cercle partiel de la section d'extrémité en forme de cercle annulaire ou de l'ébauche annulaire.

5. Procédé de fabrication d'une cage « snap » guidée sur billes (16, 30, 32) selon une des revendications précédentes, dans lequel la dimension c est supérieure à la dimension b, notamment le rapport de la dimension b sur la dimension c est faible.

6. Procédé de fabrication d'une cage « snap » guidée sur billes (16, 30, 32) selon une des revendications précédentes, dans lequel le rapport de la dimension b sur la dimension c se situe dans la plage comprise entre 0,5 et 0,02.

7. Procédé de fabrication d'une cage « snap » guidée sur billes (16, 30, 32) selon une des revendications précédentes, dans lequel le rapport de la dimension a sur le diamètre de calotte sphérique est inférieur à 1, de préférence est inférieur à 0,5, de manière davantage préférée se monte à environ 0,2.

8. Procédé de fabrication d'une cage « snap » guidée sur billes (16, 30, 32) selon une des revendications précédentes, dans lequel la lame (35) de l'outil de coupe (34) présente une partie s'élargissant de manière conique entre la partie saillante (36) et l'arbre (37) reculé par rapport à celle-ci.

9. Procédé de fabrication d'une cage « snap » guidée sur billes (16, 30, 32) selon une des revendications précédentes, dans lequel l'outil de coupe (34) comprend au moins un des matériaux suivants et/ou au moins un des matériaux de revêtement suivants ou une combinaison de deux ou plusieurs des matériaux suivants et/ou des matériaux de revêtement suivants :
- diamant polycristallin (PCD) ;
- nitrure de bore cubique (CBN) ;
- métaux durs de carbure, comme par exemple carbure de tungstène (WC), carbure de titane (TiC), carbure de tantale (TaC), carbure de tungstène-cobalt (WCCO), carbure de tungstène-carbone (WC/C) ;
- métaux durs de nitrure, comme par exemple nitrure de titane (TiN), nitrure de titane et d'aluminium (TiAIN) ;
- métaux durs de carbure-nitrure, comme par exemple nitrure-carbure de titane (TiCN) ;
- nitrure de chrome (CrN).

10. Cage « snap » guidée sur billes (16, 30, 32) pour roulements à billes qui comprend au moins une poche sphérique (18) générée par enlèvement, dans laquelle la poche sphérique (18) comprend une calotte sphérique (20) essentiellement cylindrique et au moins une arête à enclenchement (22) recouvrant partiellement la calotte sphérique (20) qui permet une introduction d'une bille (14) dans la calotte sphérique (20), dans laquelle l'axe de symétrie de la calotte sphérique cylindrique (20) est parallèle à l'axe de symétrie de la cage « snap » (16, 30, 32),
dans laquelle la poche sphérique (18) est générée au moyen d'un outil de coupe rotatif (34) qui présente une lame continue (35), comprenant une partie saillante (36) à l'extrémité libre (38) de l'outil de coupe (34) et un arbre (37) reculé par rapport à celle-ci, dans laquelle l'arête à enclenchement (22) est réalisée par la partie saillante (36) et l'arbre (37) reculé par rapport à celle-ci de l'outil de coupe (34).

11. Roulement à billes, comprenant un anneau interne, un anneau externe disposé de manière coaxiale à celui-ci et des billes disposées entre l'anneau interne et l'anneau externe, dans lequel les billes (14) sont maintenues en position au moyen de la cage «snap» guidée sur billes (16, 30, 32) fabriquée selon un procédé des revendications 1 à 9 ou au moyen d'une cage « snap » (16, 30, 32) selon la revendication 10.

12. Roulement à billes selon la revendication 11, dans lequel le roulement à billes est un roulement rainuré à billes.

13. Utilisation d'une cage « snap » guidée sur billes (16, 30, 32) fabriquée selon un procédé des revendications 1 à 9 ou d'une cage « snap » (16, 30, 32) selon la revendication 10 dans un roulement à billes pour outils dentaires à haute vitesse ou pour compteurs de mesure de fluide, notamment compteurs de mesure de gaz ou anémométriques.
